(19) Europäisches Patentamt
European Patent Office
Office européen des brevets

(11) **EP 1 767 597 B1**

(12) **EUROPEAN PATENT SPECIFICATION**

(45) Date of publication and mention
of the grant of the patent:
**17.06.2009 Bulletin 2009/25**

(51) Int Cl.:
*C09D 11/00* (2006.01)    *C08F 299/00* (2006.01)
*C08F 16/08* (2006.01)

(21) Application number: **06120619.9**

(22) Date of filing: **14.09.2006**

(54) **Ink-jet ink, ink-jet ink set and ink-jet recording method**

Tinte, Tintensatz und Aufnahmemethode für den Tintenstrahldruck

Encre, ensemble d' encres et procédé d' enregistrement par jet d' encre

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.09.2005 JP 2005273170**

(43) Date of publication of application:
**28.03.2007 Bulletin 2007/13**

(73) Proprietor: **KONICA MINOLTA HOLDINGS, INC.**
**Tokyo 100-0005 (JP)**

(72) Inventors:
• **Ohkubo, Kenichi**
**c/o Konica Minolta IJ Techn.,Inc.**
**Tokyo**
**Tokyo 191-8511 (JP)**
• **Nakamura, Masaki**
**c/o Konica Minolta IJ Techn.,Inc.**
**Tokyo**
**Tokyo 191-8511 (JP)**

• **Yamauchi, Masayoshi**
**c/o Konica Minolta IJ Tech.Inc**
**Tokyo**
**Tokyo 191-8511 (JP)**
• **Tsubaki, Yoshinori**
**c/o Konica Minolta IJ Tech.Inc.**
**Tokyo**
**Tokyo 191-8511 (JP)**
• **Furuno, Kumiko**
**c/o Konica Minolta IJ Techn.,Inc.**
**Tokyo**
**Tokyo 191-8511 (JP)**

(74) Representative: **Gille Hrabal Struck Neidlein Prop Roos**
**Patentanwälte**
**Brucknerstrasse 20**
**40593 Düsseldorf (DE)**

(56) References cited:
| | |
|---|---|
| EP-A- 1 564 232 | EP-A- 1 616 899 |
| EP-A- 1 702 961 | EP-A1- 0 997 508 |
| WO-A-20/04052947 | WO-A2-20/05012448 |
| US-A- 5 994 033 | US-A1- 2003 031 843 |

## Description

## BACKGROUND

### 1. Field of the Invention

The present invention relates to an ink-jet ink and an ink-jet ink set, both incorporating an actinic radiation reactive polymer, and an ink-jet recording method employing the same.

### 2. Description of the Related Art

Ink-jet recording methods enable highly detailed image recording, employing relatively simple devices and have been applied increasingly to various fields. Further, their uses have been diversified, and recording media or inks which meet each of the requirements are employed.

In recent years, the recording rate especially has been greatly enhanced and ink-jet printers, which exhibit performance durable for the application to shortrun printing, have been developed. However, in ink-jet printers, in order to bring out demanded performance, ink-jet exclusive paper provided with high absorbability of ink is required.

When recording is carried out on coated paper and art paper provided with minimal absorbability of ink, or plastic films provided with no ink absorbability, ink liquids which differ in color are mixed on the recording medium to result in undesirable color blending, whereby so-called color bleeding problems result. When diversity of ink-jet recording systems is provided for recording media, the above drawbacks remain to be overcome.

In order to overcome the above drawbacks, proposed is a hot-melt type ink-jet recording method in which a hot-melt ink composition, incorporating solid waxes at room temperature, is employed; the above composition is liquidified via heating; the resulting liquid is ejected via any of the applied energy; and is cooled and solidified after deposition on a recording medium, whereby recording dots are formed (refer to Patent Documents 1 and 2). Since the above hot-melt type ink composition is solid at room temperature, no staining results during handling. Further, since the ink does not evaporate during melting, no nozzles become clogged. Further, since the ink is solidified immediately after deposition onto the recording medium, it has been known that it is possible to provide excellent printing quality irrespective of paper quality, with minimal color bleeding. However, images which are recorded employing such a method, result in drawbacks such as quality degradation or insufficient abrasion resistance due to the raised dots since recorded images are composed of relatively soft and waxy dots.

On the other hand, disclosed is an ink-jet recording ink which is cured via exposure to actinic radiation (Refer to Patent Document 3). Further proposed is a so-called non-water based ink in which pigments are incorporated as a colorant; at least three-functional polyacrylates are employed as a polymerizable compound; and ketone and alcohol are employed as the main solvents (refer to Patent Document 4). Still further, proposed is a water based ink-jet ink incorporating self-dispersion type pigments, the surface of which bonds to at least one hydrophilic group, UV radiation curing type monomers composed of vinyl compounds, photopolymerization initiators, and water (refer to Patent Document 6).

Since in the actinic radiation reactive ink proposed as above, ink itself is cured via the curing components, it enables recording onto non-absorptive recording media. However, problems occur in which image uniformity is deteriorated in such a manner that unrealistic and uncomfortable image quality results due to difference in glossiness between the image carrying portions and the non-image portion (being the white background). Further, it is found that some of actinic radiation reactive inks proposed in the above result in problems of ejection instability from the ink-jet head, a decrease in waterfastness of images, and the formation of color bleeding, for which urgent improvements are demanded.

(Patent Document 1) U.S. Patent No. 4,391,365
(Patent Document 2) U.S. Patent No. 4,484,948
(Patent Document 3) U.S. Patent No. 4,228,438
(Patent Document 4) Japanese Patent Publication No. 5-64667
(Patent Document 5) Japanese Patent Publication for Public Inspection (herein after referred to as JP-A) No. 2002-80767
(Patent Document 6) JP-A No. 2002-275404

## SUMMARY

An object of the present invention is to provide an ink-jet ink and an ink-jet ink set which exhibit printing adaptability onto various recording media, result in excellent ejection stability, and produce images which exhibit excellent color bleeding resistance, beading resistance and glossiness, as well as an ink-jet recording method using the same.

The above object of the present invention is achievable employing the following embodiments.

(1) An ink-jet ink comprising a water, an organic solvent, and a polymer having a hydrophilic main chain and a plurality of side chains on the hydrophilic main chain, wherein the polymer,

(A) in which a part of the side chains are crosslinkable via exposure to actinic radiation,
(B) exists in a dissolved state in the ink-jet ink, and
(C) has a property that all amount of the polymer is not dissolved in water when the polymer is mixed with water in an amount of the same content ratio as in the ink-jet ink.

(2) An ink-jet ink set comprising at least two ink-jet inks, wherein at least one of said ink-jet inks is the ink-jet ink described in above (1).
(3) An ink-jet recording method comprising the steps of, ejecting the ink-jet ink described in above (1) on to a recording medium, exposing of actinic radiation to the ejected ink-jet ink, and thereafter, drying the exposed ink-jet ink.
(4) The ink-jet recording method comprising the steps of, ejecting the ink-jet inks of ink-jet ink set described in above (2) on to a recording medium, exposing of actinic radiation to the ejected ink-jet inks, and thereafter, drying the exposed ink-jet inks.

The invention itself, together with further objects and attendant advantages, will be understood by reference to the following detailed description.

## DESCRIPTION OF THE PREFERRED EMBODIMENTS

The preferred embodiments to practice the present invention will now be detailed.

In view of the foregoing, the inventors of the present invention conducted diligent investigation, and as a result, discovered the following, and the present invention was achieved. It was possible to realize an ink-jet ink and an ink-jet ink set which exhibited printing adaptability onto various printing media, resulted in excellent ejection stability, and produced images which exhibited excellent color bleeding resistance, beading resistance and glossiness, as well as an ink-jet recording method using the same, by employing an ink-jet ink characterized in that in an ink-jet ink incorporating at least water, an organic solvent, and a polymer, at least one of the aforesaid polymers incorporating a plurality of side chains on the hydrophilic main chain, and are crosslinkable among the side chains via exposure to actinic radiation and which exists in a dissolved state in the ink, an ink-jet ink set incorporating the aforesaid ink-jet inks, and the ink-jet recording method employing these.

The present invention will now be detailed.

The ink-jet ink (hereinafter also referred to simply as the ink) is characterized in incorporating a polymer (hereinafter also referred to as a crosslinkable polymer) which has a plurality of side chains on the hydrophilic main chain, and is crosslinkable among a part of the side chains via exposure to actinic radiation.

<<Crosslinkable polymer compounds>>

By applying in an ink the crosslinkable polymer according to the present invention, it is possible to produce an ink-jet ink which results in stable printing adaptability on various types of recording media, excellent feathering resistance, beading resistance, and bleeding resistance of the resultant images, high adhesion to recording media, and high printing quality.

Crosslinkable polymer according to the present invention will now be described.

As used herein, "crosslinkable polymers according to the present invention" are those in which modifying groups such as of a photo-dimerization type, a photo-decomposition type, a photo-polymerization type, a photo-modification type, or a photo-depolymerization type are introduced into the side chains of at least one of the hydrophilic resins selected from the group consisting of saponified polyvinyl acetate, polyvinyl acetal, polyethylene oxide, polyalkylene oxide, polyvinylpyrrolidone, polyacrylamide, polyacrylic acid, hydroxyethyl cellulose, methyl cellulose, hydroxypropyl cellulose, or derivatives of the above hydrophilic resins or copolymers thereof. Of these, in view of photographic speed and performance of formed images, preferred is the photo-polymerization type crosslinkable group.

It is possible to introduce, into the side chains, any modifying group of a photo-dimerization type, a photo-decomposition type, a photo-modification type, or a photo-depolymerization type. In view of reactivity with combined colorants, the side chains are preferably nonionic, anionic or amphoteric (namely betaine compounds). Specifically, as a colorant, when combined with anionic dyes or anionic pigments, the side chains are preferably nonionic or anionic, but are most preferably nonionic.

The modification ratio of the side chains to the hydrophilic main chain is preferably 0.8 to 4.0 mol%, but is more preferably 1.5 to 3.0 mol% in view of reactivity. When the modification ratio of the side chains to the hydrophilic main chain is at least 0.8 mol%, sufficient crosslinking capability is exhibited, whereby it is possible to achieve targeted effects of the present invention. On the other hand, when it is at most 4.0 mol%, appropriate crosslinking density is achieved, whereby a flexible image layer tends to be produced, resulting in particularly preferable layer strength.

In regard to the hydrophilic main chain, by modifying the main chain to saponified vinyl acetate, the side chains are easily introduced and the handling properties are enhanced. The degree of polymerization of the main chain is commonly in the range of 200 to 2,000, but is preferably in the range of 200 to 500 in view of sufficient realization of the targeted effects of the present invention. When the degree of polymerization is at least 200, it is possible to result in an appropriate increase in viscosity during the crosslinking reaction, whereby it is possible to sufficiently minimize the color bleeding and beading described below. On the other hand, when the degree of polymerization is at most 2,000, it is possible to retard the increase in viscosity when incorporated in an ink, whereby it is possible to result in desired ejection stability.

The partial structure of the hydrophilic main chain and a side chain of the crosslinkable polymers in the present invention is preferably represented by following Formula (A):

Formula (A) $\quad$ Poly-$\{(X1)_m$-[B-(Y1)$_n$]$_p\}$

In the above formula, "poly" represents a hydrophilic main chain, the preferable examples of which include saponified polyvinyl acetate, polyvinyl alcohol, polyethylene oxide, polyalkylene oxide, polyvinylpyrrolidone, polyacrylamide, polyacrylic acid, hydroxyethyl cellulose, methyl cellulose, hydroxypropyl cellulose, derivatives of the above hydrophilic resins, and copolymers thereof.

{} represents a side chain, "X1" represents a (P + 1) valent linking group, and "p" represents a positive integer which is preferably 1 to 5. Specifically, when p = 1, X1 represents a divalent linking group, examples of which include an alkylene group, an arylene group, a heteroarylene group, an ether group, a thioether group, an imino group, an ester group, an amido group, or a sulfonyl group, which may be combined to form a divalent or higher valent group. When p = 2, a plurality of "B" and "Y" may be the same or different.

Preferred examples of "X1" include a divalent or higher valent linking group incorporating at least alkylene oxide or an aromatic group.

"B" represents a crosslinkable group which is a double bond- or triple bond-contaianing group, examples of which include an acryl group, a methacryl group, a vinyl group, and a diazo group. Of these, preferred are the acryl and the methacryl groups.

"Y1" represents a hydrogen atom or a substituent. Specific examples of such substituent include a halogen atom (for example, a fluorine atom and a chlorine atom); an alkyl group (for example, methyl, ethyl, butyl, benzyl, 2-methoxyethyl, trifluoromethyl, 2-ethylhexyl, or cyclohexyl); an aryl group (for example, phenyl, p-tolyl, and naphthyl); an acyl group (for example, acetyl, propionyl, and benzoyl); an alkoxy group (for example, methoxy, ethoxy, and butoxy); an alkoxycarbonyl group (for example, methoxycarbonyl and i-propoxycarbonyl); an acyloxy group (for example, acetyloxy and ethylcarbonyloxy); a carbamoyl group (for example, methylcarbamoyl, ethylcarbamoyl, butylcarbamoyl, and phenylcarbamoyl); a sulfamoyl group (for example, sulfamoyl, methylsulfamoyl, dimethylsulfamoyl, and phenylsulfamoyl); an alkylthio group (for example, methylthio, ethylthio, and octylthio); an arylthio group (for example, phenylthio and p-tolylthio); an alkylureido group (for example, methylureido, ethylureido, methoxyethylureido, and dimethylureido); an arylureido group (for example, phenylureido); an alkylsulfonamido group (for example, methanesulfonamido, ethanesulfonamido, butanesulfonamido, trifluoromethylsulfonamido, and 2,2,2-trifluoroethylsulfonamido); an arylsulfonamido group (for example, phenylsulfonamido and tolylsulfonamido); an alkylaminosulfonylamino group (for example, methylaminosulfonylamino and ethylaminosulfonylamino); an arylaminosulfonylamino group (for example, phenylaminosulfonylamino); a hydroxyl group; a heterocyclyl group (for example, pyridyl, pyrazolyl, imidazolyl, furyl and thienyl). Further, these may have a substituent.

"m" represents 0 or 1, and "n" also represents 0 or 1.

Preferred as a crosslinkable polymer incorporating photo-dimerization type side chains are those into which diazo groups, cinnamoyl groups, stilbazonium groups, or stilquinolium groups are introduced. Specific examples of the compounds which incorporate such side chains include photosensitive resins (being compositions) described in JP-A No. 60-129742.

Photosensitive resins described in JP-A No. 60-129742 are the compounds represented by following Formula (1), in which stilbazonium groups are introduced into a polyvinyl alcohol-structured compound.

Formula (1)

In the above formula, "R1" represents an alkyl group having 1 to 4 carbon atoms, and "A-" represents a counter anion.

The photosensitive resins described in JP-A No. 56-67309 are resinous compositions having the 2-azido-5-nitrophenylcarbonyloxyethylene structure represented by following Formula (2), or a 4-azido-3-nitrophenylcarbonyloxyethylene structure represented by following Formula (3) in a polyvinyl alcohol-structured compound.

Formula (2)

Formula (3)

Further preferably employed is the modifying group represented by following Formula (4).

Formula (4)

In the above formula, R represents an alkylene group or an aromatic ring, but is preferably a benzene ring.

In view of reactivity, preferred as a crosslinkable polymer having photopolymerization type side chains are, for example, the resins described in JP-A No. 2000-181062 and represented by following Formula (5) described in JP-A No. 2004-189841.

Formula (5)

In the above formula, "R2" represents a methyl group or a hydrogen atom; "n" represents 1 or 2; "X" represents - $(CH_2)_m$-COO- or -O-; "Y" represents an aromatic ring or a single linking bond; and "m" represents an integer of 0 to 6.

Further, it is also preferable that the photopolymerization type compounds represented by following Formula (6), described in JP-A No. 2004-161942, are allowed to react with the water-soluble resin known in the art to form crosslinkable side chains.

Formula (6)

In the above formula, R3 represents a methyl group or a hydrogen atom, and R4 represents a straight or branched chain alkylene group having 2 to 10 carbon atoms.

Further preferably employed are crosslinkable polymers having the structure represented by following Formulas (7) to (9).

Formula (7)

(8) Formula (8)

(9) Formula (9)

In the ink-jet ink of the present invention, when a polymer incorporating photopolymerization type side chains are employed, it is preferable to employ a prior art photopolymerization initiator. Of these, it is particularly preferable to employ a water-soluble photopolymerization initiator. Photopolymerization initiators will be detailed below.

Upon such an actinic radiation crosslinkable polymer being crosslinked, a crosslinking point may be formed via intra-molecular reaction between or among the side chains belonging to one polymer molecule, or may be formed via inter-molecular reaction between or among the side chains belonging to two or more distinct polymer molecules respectively. However, it is assumed that crosslinking reactions are mostly of inter-molecular reactions with a plurality of polymer molecules, which cause a marked increase in molecular weight of the polymer. Furthermore, since a main chain of the crosslinkable polymer has some extent of molecular weight, the molecular weight increasing effect per photon is markedly great compared to a conventional actinic radiation curing type monomer in which the molecular weight is low and which polymerizes via a chain reaction.

Further, in ink employing conventional actinic radiation curing type monomers, almost all components besides colorants are related to curing. Due to that, after curing, dots are raised whereby image quality represented by glossiness is markedly degraded. On the other hand, the crosslinkable polymer according to the present invention is employed in ink in a relatively small amount and dried components are in a relatively large amount, whereby image quality after drying is enhanced and fixability is also improved.

The content of the crosslinkable polymer is preferably 0.8 to 5.0% with respect to the ink.

When the added amount is in the above range, crosslinking efficiency is enhanced, whereby by carrying out crosslinking after deposition of the ink from the head onto the substrate, beading resistance and color bleeding resistance are enhanced due to rapid increase in ink viscosity after crosslinking. When the added amount is at least 0.8%, the effects of the present invention are easily realized due to achievement of sufficient crosslinking efficiency, while when

7

it is lowered to equal to or less than 5.0%, ink viscosity does not increase excessively, whereby intermittent ejection stability tends to be enhanced.

In the foregoing, described are the structures for crosslinkable polymers. Another feature of the ink of the present invention is that a crosslinkable polymer according to the present invention is in the dissolved state in the ink composition.

The inventors of the present invention conducted various investigation on the aforesaid crosslinkable polymers. As a result, it was discovered that depending on combinations of ink compositions or compounds, a shift of ink deposition position frequently occurred. Then various analyses on the ink flying state or ink compositions were carried out. As a result, it was discovered that the shift of the ink deposition position was caused by solubility of the crosslinkable polymer.

Namely, when all amount of the crosslinkable polymer is dissolved in ink, the ejection rate and flying state of ink droplets are markedly stabilized, whereby the ink exhibits desired ejection properties. On the other hand, when all amount of the crosslinkable polymer is not dissolved in the ink (at least a part of the polymer is insoluble in ink), phenomena are seen in which the ejection rate fluctuates and the flying state of ink droplets are not stabilized. As a result, it is assumed that the shift of the ink deposition position occurred frequently.

In conventional inks, known are those which incorporate an emulsion which is an insoluble polymer, and a pigment which is a insoluble colorant. However, inks incorporating such insoluble components do not result in the above insufficient ejection. This phenomenon is considered as a specific problem for the ink incorporating the crosslinkable polymers.

At present, the cause is not completely understood, but the following is assumed to be factors. Namely, the main chain of the crosslinkable polymer according to the present invention is hydrophilic. When all amount of the polymer is not dissolved in a water based ink, it is assumed that hydrophobicity of the side chain structure of the crosslinkable polymer is high. In such a case, it is assumed that side chains of the crosslinkable polymer, which are not dissolved in the ink, are subjected to strong association due to hydrophobic mutual interaction. Further, it is assumed that the crosslinkable polymer form a gel structure having a markedly large apparent molecular weight. Due to that, ink shortage during ink ejection results and normal formation of a meniscus after ink ejection is hindered. As a result, it is assumed that the ejection rate fluctuates and an unstable flying state results.

As a method to judge solubility of the crosslinkable polymer, listed are visual observation of the presence or absence of suspensions and precipitates, as well as determination of turbidity or transmittance. In a state in which the polymer is dissolved, neither suspensions nor precipitates are visually identified. When evaluation is carried out based on the determination of turbidity, in the case of the turbidity of a liquid incorporating the polymer of less than 10 NTU, in the present invention, it is judged to be in a dissolved state.

When pigments and emulsions, which are insoluble in ink, and a large amount of colorants are incorporated, it is occasionally difficult to carry out evaluating of solubility of the crosslinkable polymer. In such a case, it is preferable to confirm solubility of polymer compounds by preparing a pseudo-ink in which dispersions and colorants are replaced with water. Namely, insoluble dispersions and colorants incorporated in the ink do not directly affect solubility of the crosslinkable polymer, whereby replacement with water is assumed to result in no effect for evaluation of solubility of the crosslinkable polymer. In such a manner, when the crosslinkable polymer is dissolved in the pseudo-ink in which the dispersions and colorants are replaced with water, an ink incorporating dispersions and colorants result in effects of the present invention in a similar manner.

In a printer loaded with the ink of the present invention, it is preferable to evaluate the solubility at the temperature during ink ejection from the head. In the case of ink which is employed, at room temperature, as a premise without carrying out temperature control at the head, the temperature tends to be the center value of the assured ambience for printer operation. In the present invention, 20 °C is specified to be the standard temperature for solubility evaluation.

Further, not only during ink ejection, but also during storage and transportation of ink, it is preferable that the crosslinkable polymer is dissolved in view of minimizing variation of physical properties of the ink. Specifically, it is preferable that the crosslinkable polymer is dissolved at a temperature between 0 to 40 °C, in addition to the temperature during ink ejection.

Methods to dissolve the polymer in ink include the following two:

1. A method to enhance the hydrophilicity of the crosslinkable polymer in such a manner that the side chains are subjected to be hydrophilic, or the side chain modification ratio is increased, and
2. A method to employ solvents which solubilizes the crosslinkable polymer.

However, an ink employing the crosslinkable polymer which exhibits low solubility in water but is solubilized by the addition of organic solvents, namely an ink which is employed utilizing the above two methods is more preferred in view of color bleeding resistance and beading resistance. This mechanism is not completely understood, but is assumed to be as follows.

Namely, it is assumed that, as noted above, low water solubility of the polymer having a hydrophilic chain results in an increase in hydrophobicity as the entire side chains. In such a case, if all amount of the crosslinkable polymer is dissolved in the ink, mutual interaction and collision probability among side chains are assumed to increase, though association among side chains is not formed. As a result, crosslinking reactions among side chains performed via exposure to actinic radiation during image formation are efficiently performed to increase gelling sensitivity, whereby it is assumed to effectively minimize color bleeding as well as beading.

It is possible to confirm the solubility of the crosslinkable polymer in water by preparing a liquid composition in which the above crosslinkable polymer is blended in water to result in the same content ratio (in weight%) as that of the crosslinkable polymer with respect to the total ink. In the mixing liquid composition, the crosslinkable polymer which is not completely dissolved in water is selected and the polymer is solubilized in solvents employed during ink preparation.

Examples of solvents which solubilize the crosslinkable polymer include alcohols (for example, methanol, ethanol, propanol, isopropanol, butanol, isobutanol, secondary butanol, and tertiary butanol, pentanol, hexanol, cyclohexanol, and benzyl alcohol); polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thioglycol); polyhydric ethers (for example, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monobutyl ether, ethylene glycol monomethyl ether acetate, triethylene glycol monomethyl ether, triethylene glycol monoethyl ether, triethylene glycol monobutyl ether, ethylene glycol monophenyl ether, and propylene glycol monophenyl ether); amines (for example, ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine); amides (for example, formamide, N,N-dimethylformamide, and N,N-dimethylacetamide); heterocyclic compounds (for example, 2-pyrrolidinone, N-methyl-2-pyrrolidone, cyclohexylpyrrolidone, 2-oxazolidone, ethylene carbonate, propylene carbonate, 1,3-dimethyl-2-imidazolidinone); and sulfoxides (for example, dimethylsulfoxide).

It is possible to dissolve the crosslinkable polymer by appropriately selecting the polarity and the used amount of the aforesaid solvents in response to the side chain structure and modification ratio of the used crosslinkable compounds. For example, when ethylene glycol and propylene glycol, as well as triethylene glycol and triethylene glycol monomethyl ether are compared, the latter is a more hydrophobic solvent due to the difference in the number of carbon atoms and the number of hydroxyl groups, and is more effective in solubilizing the crosslinkable polymer.

Further, when a crosslinkable polymer in which the side chain structure is more hydrophobic and the modification ratio is greater, it is possible to solubilize by increasing the added amount of the aforesaid solvents or by selecting more hydrophobic solvents.

Since it is possible to more freely design ink formulas, it is preferred that solubilizing solvents exhibit higher solubilizing capability even in a small amount. Specifically preferred are 1,2-alkanediol having 4 to 7 carbon atoms (for example, 1,2-butanediol and 1,2-hexanediol), polyhydric alcohol ethers, and heterocyclyl compounds. Of these, in view of glossiness, more preferred are heterocyclyl compounds. Particularly, listed as a preferable solvent is 2-pyrrolidinone due to its high moisture retention capability and low toxicity.

<<Dissolution of the Crosslinkable polymer>>

In order to dissolve the crosslinkable polymer in the ink, it is preferable to control the modification ratio of the side chains within the range of about 0.8 to about 4 mol%. By controlling the modification ratio within at least 0.8 mol%, it is easy to prepare an ink capable of sufficiently minimizing color bleeding. On the other hand, by controlling the same to at most 4 mol%, necessary solvents to dissolve the crosslinkable polymer tend to not become excessive, whereby it becomes easier to control the other physical properties (for example, viscosity and surface tension) of the ink.

Further, in order to prepare a crosslinkable polymer which exhibits low solubility in water, but is solublized by the addition of organic solvents, namely to prepare a crosslinkable polymer capable of more effectively minimizing bleeding, it is preferable to control the modification ratio of the side chains to at least 1.5 mol%, depending on the structure of the main and side chains.

<<Photopolymerization Initiators and Sensitizers>>

In the present invention, when a crosslinkable polymer having polymerizable side chains are employed, it is preferable to incorporate a photopolymerization initiator and a sensitizer. These compounds are incorporated in a dissolved or dispersed state in solvents and may be chemically bonded to the crosslinkable polymer.

Employed photopolymerization initiators and photosensitizers are not particularly limited, and it is possible to employ conventional known compounds. Of these, water-soluble compounds are preferred in view of mixing properties and reaction efficiency. Specifically preferred are 4-(2-hydroxyethoxy)phenyl-(2-hydroxy-2-propyl)ketone (HMPK), thioxanthone ammonium salts (QTX), and benzophenone ammonium salts (ABQ), in view of mixing properties in water based solvents.

Further, in view of compatibility with water based solvents, more preferred are 4-(2-hydroxyethoxy)phenyl-(2-hydroxy-2-propyl)ketone (n = 1, HMPK), represented by following Formula (10), and ethylene oxide adducts (n = 2 - 6).

Formula (10)

In the above formula, n represents an integer of 1 to 5.

Further, examples of other photopolymerization initiators include benzophenones such as benzophenone, hydroxybenzophenone, bis-N,N-dimethylaminobenzophenone, bis-N,N-diethylaminobenzophenone, or 4-methoxy-4'-dimethylaminobenzophenone; thioxanthones such as thioxanthone, 2,4-diethylthioxanthone, isopropylthioxanthone, chlorothioxanthone, or isoproxycycloxanthone; anthraquinones such as ethylanthraquinone, benzanthraquinone, aminoanthraquinone, or chloroanthraquinone; acetophenones; benzoin ethers such as benzoin methyl ether; 2,4,6-trihalomethyltriazines; 1-hydroxycyclohexyl phenyl ketone, 2-(o-chlorophenyl)-4,5-diphenylaimizazole dimers, 2-(o-chlorophenyl)-4,5-di(methoxyphenyl)imidazole dimers, 2-(o-fluorophenyl)-4,5-penylimidazole dimers, 2-(o-methoxyphenyl)-4,5-phenylimidazole dimers, 2-(p-methoxyphenyl)-4,5-diphenylimizadole dimers, 2-di(p-methoxyphenyl)-5-phenylimizazole dimers, 2,4,5-triarylimidazole dimers of 2-(2,4-dimethoxyphenyl)-4,5-diphenylimidazole dimers, benzyl methyl ketal, 2-benzyl-2-dimethylamino-1-(4-morphollnophenyl)butane-1-one, 2-methyl-1-[4" (methylthio)phenyl]-2-morpholino-1-propane, 2-hydroxy--2-methyl-1-phenyl-propane-1-one, 1-[4-(2-hydroxyethoxy)-phenyl]-2-hydroxy-2-methyl-1-propane-1-one, phenanthrenequinone, 9,10-phenanthrenequinone; benzoins such as methylbenzoin, or ethyl benzoin; and acridine derivatives such as 9-phenylacridine or 1,7-bis(9,9'-acrydinyl)heptane; bisacylphosphine oxide; and mixtures thereof. The above compounds may be employed individually or in combinations.

It is possible to incorporate a promoter together with these photopolymerization initiators. Such examples include ethyl p-dimethylaminobenzoate, isoamyl p-dimethylaminobenzoate, ethanolamine, diethanolamine, and triethanolamine.

These photopolymerization initiators may be subjected to graft as side chains for the hydrophilic main chain of the crosslinkable polymer.

The other constituting components of the ink-jet ink of the present invention will now be described.

<<Colorants>>

Employed as colorants used in the ink-jet ink of the present invention may be dyes or pigments.

Dyes usable in the present invention are not particularly limited and include water-soluble dyes such as acid dyes, direct dyes, or reactive dyes, as well as disperse dyes.

Specific examples of dyes applicable to the ink-jet ink of the present invention are cited below, however, the present invention is not limited thereto.

Cited as water-soluble dyes usable in the present invention may, for example, be azo dyes, methine dyes, azomethine dyes, xanthene dyes, quinone dyes, phthalocyanine dyes, triphenylmethane dyes, and diphenylmethane dyes.

Listed may be:

<C. I. Acid Yellow>
1, 3, 11, 17, 18, 19, 23, 25, 36, 38, 40, 42, 44, 49, 59, 61, 65, 67, 72, 73, 79, 99, 104, 110, 114, 116, 118, 121, 127, 129, 135, 137, 141, 143, 151, 155, 158, 159, 169, 176, 184, 193, 200, 204, 2078, 215, 219, 220, 230, 232, 235, 241, 242, and 246;
<C. I. Acid Orange>
3, 7, 8, 10, 19, 24, 51, 56, 67, 74, 80, 86, 87, 88, 89, 94, 95, 107, 108, 116, 122, 127, 140, 142, 144, 149, 152, 156, 162, 166, and 168;
<C. I. Acid Red>
88, 97, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, and 415;
<C. I. Acid Violet>
17, 19, 21, 42, 43, 47, 48, 49, 54, 66, 78, 90, 97, 102, 109, and 126;
<C. I. Acid Blue>
1, 7, 9, 15, 23, 25, 40, 62, 72, 74, 80, 83, 90, 92, 103, 104, 112, 113, 114, 120, 127, 128, 129, 138, 140, 142, 156, 158, 171, 182, 185, 193, 199, 201, 203, 204, 205, 207, 209, 220, 221, 224, 225, 229, 230, 239, 249, 258, 260, 264, 278, 279, 280, 284, 290, 296, 298, 300, 317, 324, 333, 335, 338, 342, and 350;
<C. I. Acid Green>
9, 12, 16, 19, 20, 25, 27, 28, 40, 43, 56, 73, 81, 84, 104, 108, and 109;
<C. I. Acid Brown>
2, 4, 13, 14, 19, 38, 44, 123, 224, 226, 227, 248, 282, 283, 289, 294, 297, 298, 301, 355, 357, and 413;
<C. I. Acid Black>
1, 2, 3, 24, 26, 31, 50, 52, 58, 60, 63, 107, 109, 112, 119, 132, 140, 155, 172, 187, 188, 194, 207, and 222;
<C. I. Direct Yellow>
8, 9, 10, 11, 12, 22, 27, 28, 39, 44, 50, 58, 79, 86, 87, 98, 105, 106, 130, 132, 137, 142, 147, and 153;
<C. I. Direct Orange>
6, 26, 27, 34, 39, 40, 46, 102, 105, 107, 118;
<C. I. Direct Red>
2, 4, 9, 23, 24, 31, 54, 62, 69, 79, 80, 81, 83, 84, 89, 95, 212, 224, 225, 226, 227, 239, 242, 243, and 254;
<C. I. Direct Violet>
9, 35, 51, 66, 94, and 95;
<C. I. Direct Blue>
1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, and 291;
<C. I. Direct Green>
26, 28, 59, 80, and 85;
<C. I. Direct Brown>
44, 106, 115, 195, 209, 210, 222, and 223;
<C. I. Direct Black>
17, 19, 22, 32, 51, 62, 108, 112, 113, 117, 118, 132, 146, 154, 159, and 169;
<C.I. Reactive Yellow>
2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, and 176;
<C. I. Reactive Orange>
1, 4, 5, 7, 11, 12, 13, 15, 16, 20, 30, 35, 56, 64, 67, 69, 70, 72, 74, 82, 84, 86, 87, 91, 92, 93, 95, and 107;
<C. I. Reactive Red>
2, 3, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 228, and 235;
<C. I. Reactive Violet>
1, 2, 4, 5, 6, 22, 23, 33, 36, and 38;
<C. I. Reactive Blue>
2, 3, 4, 5, 7, 13, 14, 16, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, and 236;
<C. I. Reactive Green>
8, 12, 15, 19, and 21;
<C. I. Reactive Brown>
2, 7, 9, 10, 11, 17, 18, 19, 21, 23, 31, 37, 43, and 46;
<C. I. Reactive Black>
5, 8, 13, 14, 31, 34, and 39;
<C. I. Food Black>
1 and 2.

Further listed as dyes are the compounds represented by following Formula (11) or (12).

Formula (11)

Formula (12)

Formula (13)

In above Formula (11), R1 represents a hydrogen atom or a substituent which may be substituted, and is preferably a hydrogen atom or a phenylcarbonyl group. R2 may differ and represents a hydrogen atom or a substituent which may be substituted, but is preferably a hydrogen atom. R3 represents a hydrogen atom or a substituent which may be substituted, and is preferably a hydrogen atom or an alkyl group. R4 represents a hydrogen atom or a substituent which may be substituted, and is preferably a hydrogen atom or an aryloxy group. R5 may differ and represents a hydrogen atom or a substituent which may be substituted, and is preferably a sulfonic acid group. "n" represents an integer of 1 to 4 and m represents an integer of 1 to 5.

In above Formula (12), X represents a phenyl group or a naphthyl group which may be substituted with a substituent, and is preferably substituted with a sulfonic acid group or a carboxyl group. Y represents a hydrogen ion, a sodium ion, a potassium ion, a lithium ion, an ammonium ion, or an alkyl ammonium ion. R6 may differ and represents a hydrogen atom and a substituent capable of being substituted on a naphthalene ring. "q" represents 1 or 2. "p" represents an integer of 1 to 4, but q + p = 5. Z represents a substituent which may be substituted, and represents a carbonyl group, a sulfonyl group, or the group represented by following Formula (13). Of these, particularly preferred is the group represented by following Formula (13).

In above Formula (13), W1 and W2 may differ, and each represents a halogen atom, an amino group, a hydroxyl group, an alkylamino group, or an arylamino group, of which the halogen atom or the alkylamino group is preferred.

Other than these, it is possible to cite various disperse dyes such as azo based disperse dyes, quinone based disperse dyes, anthraquinone based disperse dyes, or quinophthalone based disperse dyes, chelate dyes, and azo dyes employed in silver dye bleach photosensitive materials (such as CIBACHROME produced by Ciba Geigy)).

Chelate dyes are described, for example, in British Patent No. 1,077,484. Further, azo dyes for the silver dye bleach photosensitive materials are described, for example, in British Patent Nos. 1,039,458, 1,004,957, and 1,077,628, as well as in U.S. Patent No. 2,612,448.

Listed as pigments usable in the present invention may be organic or inorganic pigments known in the art. Examples include organic pigments such as azo pigments such as azo lake pigments, insoluble azo pigments, condensed azo pigments, or chelate azo pigments, polycyclic pigments such as phthalocyanine pigments, perylene and perylene pigments, anthraquinone pigments, quinacridone pigments, dioxanzine pigments, thioindigo pigments, isoindolinone pigments, or quinophtharony pigments, dye lakes such as basic dye type lakes, acid dye type lakes, nitro pigments, nitroso pigments, and aniline black, and day light fluorescent pigments, as well as inorganic pigments such as carbon blacks.

Specific examples of pigments applicable to the ink-jet ink of the present invention will now be cited below, however the present invention is not limited thereto.

Examples of pigments for magenta or red include C. I. Pigment Red 2, C. I. Pigment Red 3, C. I. Pigment Red 5, C. I. Pigment Red 6, C. I. Pigment Red 7, C. I. Pigment Red 15, C. I. Pigment Red 16, C. I. Pigment Red 48 : 2, C. I. Pigment Red 53 : 1, C. I. Pigment Red 57 : 1, C. I. Pigment Red 122, C. I. Pigment Red 123, C. I. Pigment Red 139, C. I. Pigment Red 144, C. I. Pigment Red 149, C. I. Pigment Red 166, C. I. Pigment Red 177, C. I. Pigment Red 178, and C. I. Pigment Red 222.

Examples of pigments for orange or yellow include C. I. Pigment Orange 31, C. I. Pigment Orange 43, C. I. Pigment Yellow 12, C. I. Pigment Yellow 13, C. I. Pigment Yellow 14, C. I. Pigment Yellow 15, C. I. Pigment Yellow 17, C. I. Pigment Yellow 74, C. I. Pigment Yellow 93, C. I. Pigment Yellow 94, C. I. Pigment Yellow 128, C. I. Pigment Yellow 138, C. I. Pigment Yellow 150, and C. I. Pigment Yellow 180.

Examples of pigments for green or cyan include C. I. Pigment Blue 15, C. I. Pigment Blue 15 : 2, C. I. Pigment Blue 15 : 3, C. I. Pigment Blue 15 : 4; C. I. Pigment Blue 16, C. I. Pigment Blue 60, and C. I. Pigment Green 7.

Further, examples of pigments for black include carbon blacks.

(Self-Dispersion Pigments)

Further, in the ink-jet ink of the present invention, employed as pigments may be self-dispersion pigments. "Self-dispersion pigments", as described herein, refer to pigments capable of being dispersed without dispersing agents and pigment particles having polar groups on the surface are particularly preferred.

Pigment particles having polar groups on the surface, as described herein, refer to pigments of which particle surface is directly modified by polar groups, or organic pigment mother nucleus incorporating organic materials (hereinafter also referred to as pigment derivatives), which are bonded to polar groups directly or via a joint.

Examples of polar groups include a sulfonic acid group, a carboxylic acid group, a phosphoric acid group, a boric acid group, and a hydroxyl group. Of these, the sulfonic acid group and the carboxylic acid group are preferred, but the sulfonic acid group is more preferred.

Methods to prepare pigment particles having polar groups on their surface are described, for example, in WO 97/48769, as well as JP-A Nos. 10-110129, 11-246807, 11-57458, 11-189739, 11-323232, and 2000-265094 , wherein polar groups such as a sulfonic acid group or salts thereof are introduced onto at least some part of the particle surface while oxidizing the surface of pigment particles employing suitable oxidizing agents. In practice, carbon black is oxidized by concentrated nitric acid, and in the case of color pigments, they may be prepared upon being oxidized via sulfamic acid, sulfonated pyridine salts, or amidosulfuric acid in sulfolan or N-methyl-2-pyrrolidone. Oxidation is carried out employing such reactions and those which are modified to be water-soluble are removed and purification is conducted, whereby it is possible to prepare a pigment dispersion. Further, when a sulfonic acid group is introduced onto the surface via oxidation, the acidic group, if desired, may be neutralized employing basic compounds.

Other methods include one in which the pigment derivatives, described in JP-A Nos. 11-49974, 2000-273383, and 2000-303014 are adsorbed onto the surface of pigment particles employing processes such as milling, and the other in which the pigments, described in JP-A Nos. 2002-179977 and 2002-201401, are dissolved in solvents together with pigment derivatives and then crystallized into poor solvents. By employing any of the above methods, it is possible to readily prepare pigment particles having polar groups on their surfaces.

Polar groups may be in a free state or in the state of a salt, or may have a counter salt. Examples of counter salts include inorganic salts (for example, salts of lithium, sodium, potassium, magnesium, calcium, aluminum, nickel, and ammonium), and organic salts (for example, triethyl ammonium, diethyl ammonium, pyridium, and triethanol ammonium). Of these, preferred are counter salts exhibiting univalence.

(Production Method of Pigment Dispersion)

It is possible to disperse pigments employing various homogenizers such as a ball mill, a sand mill, an attritor, a roller mill, an agitator, a HENSCHEL mixer, a colloid mill, an ultrasonic homogenizer, a pearl mill, a wet-system jet mill, or a paint shaker. Further, to remove coarse particles from a pigment dispersion, it is preferable to use a centrifuge or a filter.

(Surface Active Agents Applicable to Dispersing Pigments)

During preparation of a pigment dispersion, surface active agents and polymer dispersing agents, if required, may be incorporated as a pigment dispersing agent. Types of surface active agents and polymer dispersing agents are not particularly limited. Cited as surface active agents may, for example, be those such as higher fatty acid salts, alkyl sulfates, alkyl ester sulfates, sulfosuccinates, naphthalene sulfonates, alkyl phosphates, polyoxyalkylene alkyl ether phosphates, polyoxyalkylene alkyl phenyl ethers, polyoxyethylene polyoxypropylene glycol, glycerin ester, sorbitan ester, polyoxyethylene fatty acid amides, and amine oxides. Further, as polymer dispersing agents, it is preferable to employ water-soluble resins in view of ejection stability. Cited as such may, for example, be block copolymers and random copolymers composed of at least two monomers selected from styrene, styrene derivatives, vinylnaphthalene derivatives, acrylic acid, acrylic acid derivatives, maleic acid, maleic acid derivatives, itaconic acid, itaconic acid derivatives, fumaric acid, and fumaric acid derivatives. More specifically, cited may be styrene-acrylic acid-alkyl acrylate copolymers, styrene-acrylic acid copolymers, styrene-maleic acid-alkyl acrylate copolymers, styrene-maleic acid copolymers, styrene-methacrylic acid-alkyl acrylate copolymers, styrene-methacrylic acid copolymers, styrene-maleic acid half-ester copolymers, vinylnaphthalene-acrylic acid copolymers, and vinylnaphthalene-maleic acid copolymers.

The added amount of each of the above polymer dispersing agents is preferably 0.1 to 10% by weight with respect to the total ink, but is more preferably 0.3 to 5% by weight. These polymer dispersing agents may be employed in combinations of at least two types.

(Diameter of Pigment Particles)

The diameter of pigment particles includes a particle diameter (being a diameter of primary particles) which is determined by directly observing the particles employing an electron microscope, a dispersion particle diameter (being a secondary particle diameter) which is determined employing a particle size meter utilizing light scattering, and a viscosity conversion particle diameter determined based on intrinsic viscosity.

In view of lightfastness and dispersion stability, the primary particle diameter of pigments in the ink of the present invention is preferably 10 to 100 nm, but is more preferably 10 to 70 nm. When the above diameter is at least 10 nm, image lightfastness tends to be enhanced, while when it is at most 100 nm, head orifice clogging tends to be minimized. It is possible to determine the primary particle diameter, as described herein, in such a manner that the major axis of 1,000 pigment particles is determined employing a transmission type electron microscope and the average value (being the number average) is calculated.

<<Ink-Jet Ink Set>>

The ink-jet ink set of the present invention is characterized by being composed of at least two types of ink-jet inks and in that at least one type of the above ink-jet inks is the ink-jet ink of the present invention.

The ink-jet ink set of the present invention includes the ink-jet inks described above. It is preferable that at least two inks are ink-jet inks of the present invention and it is particularly preferable that all the inks are ink-jet inks of the present invention, whereby the targeted effects of the present invention are markedly exhibited.

As hue differing inks, which constitute the ink-jet ink set of the present invention, it is preferable to employ an ink set which is composed of each of a yellow, magenta, cyan, and black ink-jet inks.

Further, in addition to the above four color inks, employed may be a pale cyan ink, a pale magenta ink, a dark yellow ink, and a pale black ink (being a gray ink).

Further, it is possible to employ ink of special colors such as blue, red, green, orange or violet.

(Dark and Pale Inks)

In the ink-jet ink set of the present invention, it is desired to employ an ink-jet ink set which is composed of at least two identical color inks which differ only in concentration. Further, in at least three color inks, it is more preferable to employ an ink-jet set composed of at least two identical color inks which differ in concentration. Specifically, in at least three color inks, it is preferable to employ an ink-jet ink set composed of at least two identical color inks which differ in concentration.

The reasons for the above are as follows. By employing a low concentration ink-jet ink, it is possible to reduce the feel of granularity, whereby it is possible to form high quality images exhibiting minimal so-called "grainy". Specifically, in a magenta or cyan ink which results in high human spectral luminous efficacy, it is preferable to employ at least two inks which differ in concentration.

The concentration ratio in the ink-jet ink set, in which concentration differs, is not particularly limited. However, in order to realize smooth tone reproduction, the ratio (being colorant concentration of a low concentration ink/colorant concentration of a high concentration ink) is preferably 0.1 to 1.0, is more preferably 0.2 to 0.5, but is most preferably 0.25 to 0.4.

<<Other Additives for Ink-Jet Ink>>

In order to enhance ejection stability, adaptability of print heads and ink cartridges, storage stability, image retention properties, and various other characteristics, various additives known in the art, if desired, may be selected and then employed. Examples include viscosity modifiers, surface tension controlling agents, resistivity controlling agents, film forming agents, dispersing agents, surface active agents, UV absorbers, antioxidants, anti-fading agents, mildewcides, and anti-corrosives. Cited may, for example, be organic latexes of polystyrene, polyacrylates, polymethacrylates, polyacrylamides, polyethylene, polypropylene, polyvinyl chloride, or copolymers thereof, urea resins, or melamine resins; minute oil droplets of liquid paraffin, dioctyl phthalate, tricresyl phosphate, and silicone oil; various cationic or nonionic surface active agents; the UV absorbers described in JP-A Nos. 57-74192, 57-87989, 60-72785, 61-146591, 1-95091, and 3-13376; the anti-fading agents described in JP-A Nos. 57-74192, 57-87989, 60-72785, 61-146591, 1-95091, and 3-13376; the optical brightening agents described in JP-A Nos. 59-42993, 59-52689, 62-280069, 61-242871, and 4-219266; and pH controlling agents such as sulfuric acid, phosphoric acid, citric acid, sodium hydroxide, potassium hydroxide, or potassium carbonate.

(Latexes)

In the ink-jet ink of the present invention, latexes may be incorporated in ink. Examples of such latexes include those of styrene-butadiene copolymers, polystyrene, acrylonitrile-butadiene copolymers, acrylate copolymers, polyurethane, silicone-acryl copolymers, and acryl modified fluororesins. Latexes may be those which are prepared by dispersing polymer particles employing emulsifiers or employing no emulsifiers. Frequently employed as emulsifiers are surface active agents, and it is preferable to employ polymers (such as polymers in which the solubilizing group is subjected to graft bonding, and polymers which are prepared employing solubilizing group incorporating monomers and insoluble portion incorporating monomers) having a water-soluble group such as a sulfonic acid group or a carboxylic acid group.

Further, in the ink-jet ink of the present invention, it is particularly preferable to employ soap-free latexes. Soap-free latexes, as described herein, refer to latexes in which no emulsifiers are employed, and latexes which are prepared employing, as an emulsifier, polymers (for example, polymers in which the solubilizing group is subjected to graft bonding, and polymers prepared employing monomers having a solubilizing group and monomers having a insoluble portion).

In recent years, other than latexes in which polymer particles, each of which is identical, are dispersed, latexes are present in which polymer particles composed of different compositions between the central portion and the peripheral portion of the particle. It is possible to preferably employ such types of latexes.

In the ink-jet ink of the present invention, the average diameter of polymer particles in latexes is preferably 10 - 300 nm, but is more preferably 10 - 100 nm. When the average particle diameter of particles in a latex is at least 10 nm, preferred water resistance and abrasion resistance are readily realized. It is possible to determine the average diameter of polymer particles in latexes employing commercial particle size meters based on the light scattering method, the electrophoretic method, or the laser Doppler method.

In the ink-jet ink of the present invention, the added amount of latexes is 0.1 to 20% by weight in terms of solids with respect to the total ink weight, but is most preferably 0.5 - 10% by weight. By incorporating latexes in an amount of at least 0.1% by weight in terms of solids, desired effects tend to result in enhancement of weather resistance. On the other hand, by controlling the amount to at most 20% by weight, the ink hardly exhibits problems during storage.

(Thermal Ejection Stabilizers)

The ink-jet ink of the present invention may be employed in thermal type ink-jet printers. In such a case, in order to minimize head orifice clogging, also called cogation, incorporated may be salts selected from $(M1)_2SO_4$, $CH_3COO(M1)$, Ph-COO(M1), $(M1)NO_3$, (M1)Cl, (M1)Br, (M1)I, $(M1)_2SO_3$, and $(M1)_2CO_3$, disclosed in JP-A No. 2001-81379. In the above formulas, M1 represents an alkaline metal, ammonium, or organic ammonium, and Ph represents phenyl. Examples of the above alkaline metals include Li, Na, K, Rb and Cs. Further, examples of organic ammonium include methyl ammonium, dimethyl ammonium, trimethyl ammonium, ethyl ammonium, diethyl ammonium, triethyl ammonium, trihydroxymethylamine, dihydoxymethylamine, monohydroxymethylamine, monoethanol ammonium, diethanol ammonium, triethanol ammonium, N-methylmonoethanol ammonium, N-methyldiethanol ammonium, monopropanol ammonium, dipropanol ammonium, and tripropanol ammonium.

(Crosslinking Agents)

Crosslinking agents may be incorporated in the ink-jet ink of the present invention. Specific examples of the crosslinking agents include epoxy based hardening agents (such as diglycidyl ethyl ether, ethylene glycol diglycidyl ether, 1,4-butanediol diglycidyl ether, 1,6-diglycidylcyclohexane, N,N-diglycidyl-4-glycidyloxyaniline, sorbitol polyglycidyl ether, or glycerol polyglycidyl ether); aldehyde based hardening agents (such as formaldehyde or glyoxal); active halogen based hardening agents (such as 2,4-dichloro-4-hydroxy-1,3,5-s-triazine); active vinyl based compounds (such as 1,3,5-trisacryloyl-hexahydro-s-triazine, or bisvinylsulfonyl methyl ether); and alum, boric acid and salts thereof.

(Surface Active Agents)

Surface active agents which are preferably employed in the ink-jet ink of the present invention include anionic surface active agents such as alkyl sulfates, alkyl ester sulfates, dialkylsulfosuccinates, aklylnaphthalene sulfonates, alkyl phosphates, polyoxyalkylene alkyl ether phosphates, or fatty acid salts; nonionic surface active agents such as polyoxyethylene alkyl ethers, polyoxyalkylene alkyl phenyl ethers, acetylene glycols, and polyoxyethylene-polyoxypropylene block copolymers; surface active agents such as glycerin ester, sorbitan ester, polyoxyethylene fatty acid amide, or amine oxide; as well as cationic surface active agents such as alkylamine salts or quaternary ammonium salts.

<<Preparation of Inks>>

Preparation methods of the ink-jet ink of the present invention is not particularly limited. When ink incorporating a dispersion of pigments, disperse dyes, minute inorganic particles, or minute resinous particles is prepared, it is preferable that the ink is prepared so that neither coagulation nor precipitation occurs during the preparation process. If desired, it is possible to employ preparation methods in which the addition order and addition rate of dispersion, solvents, water, photosensitive resins, and other additives are regulated. Further, during or after preparation, a dispersion treatment and a heating treatment employing a bead mill or ultrasonic waves may be conducted to stabilize dispersion and to re-disperse coagulants formed during preparation.

<<Physical Properties of Ink>>

(Viscosity)

Viscosity of the ink-jet ink of the present invention is not particularly limited, but is preferably 2 to 15 mPa·s at 25 °C. Further, it is preferable that the viscosity of ink-jet ink of the present invention is independent of the shear rate.

If ink viscosity (mPa·s), as described in the present invention, is determined based on the viscometer calibration standard liquid specified in JIS Z 8809, it is not particularly limited and refers to the viscosity value determined at 25 °C employing a common method known in the art. Employed as viscosity measuring instruments are viscometers employing a rotation system, a vibration system, and a capillary system. Measurement may be conducted employing, for example, a SAYBOLT viscometer or a REDWOOD viscometer. Cited as examples may be a conical horizontal plate E type viscometer produced by TOKIMEC, INC., an E Type Viscometer (being a rotary viscometer) produced by Toki Sangyo Co., Ltd. a B type viscometer BL produced by Tokyo Keiki Co., Ltd., an FVM-80A produced by Yamaichi Electronics Co., Ltd., a VISCOLINER produced by Nametore Industry Co., and VISCO MATE MODEL VM-1A and DD-1, both produced by Yamaichi Electronics Co., Ltd.

(Surface Tension)

Surface tension of the ink-jet ink of the present invention is preferably at most 35 mN/m, but is more preferably 20 to 35 mN/m.

Surface tension (mN/m), as described in the present invention, refers to the value of surface tension determined at 25 °C and its measurement methods are described in common references of surface chemistry and colloid chemistry. Reference may be made, for example, to pages 68 to 117 of Shin Jitsuken Kagaku Koza Dai 18 Kan (Kaimen to Colloid) (Volume 18 Lecture of New Experimental Chemistry, Boundary and Colloid), edited by Nihon Kagaku Kai, published by Maruzen Co., Ltd. In practice, it is possible to determine surface tension employing a ring method (being the du Nouy Method) or a platinum plate method (being the Wilhelmy Method). In the present invention, surface tension (mN/m) is represented by a value determined based on the platinum plate method, and it is possible to determine it, employing, for example, a surface tension meter CBVP-Z, produced by Kyowa Interface Science Co., Ltd.

(Deaeration)

The dissolved oxygen concentration in the ink-jet ink of the present invention is preferably at most 2 ppm, but is more preferably at most 1 ppm. When the dissolved oxygen concentration in the ink-jet ink is at most 2 ppm, cavitation hardly results during ink ejection, whereby ink tends to exhibit desired ejection properties.

Methods to control the dissolved oxygen concentration are not particularly limited, but include a method in which an ink-jet ink is deaerated under vacuum, a method in which deaeration is conducted by applying ultrasonic waves, and a method in which deaeration is achieved employing a hollow fiber deaeration membrane, as described in JP-A No. 11-209670. Of these, deaeration employing the hollow fiber deaeration membrane is particularly preferred.

<<Recording Media>>

It is possible to employ various types of paper, film, cloth, wood, and ink-jet recording media as usable recording media in the ink-jet recording method of the present invention. However, recording media are preferably coated printing paper or non-absorptive recording media.

(Coated Printing Paper)

coated printing paper, as described herein, refers to coated paper which is frequently employed for printing. It is commonly prepared in such a manner that high or medium quality paper is employed as a support and after applying pigments such as clay onto the surface, calendering is conducted to enhance smoothness. Via such treatments, whiteness, smoothness, printing ink acceptability, halftone dot reproduction, printing glossiness, and printing opacity are enhanced. Based on the coated amount, classification such as art paper, coated paper, and light weight coated paper is possible, while based on paper glossiness, classification such as gloss based, dull based, or matte based is possible.

Art paper is a coated paper in which the coated amount on one side is approximately 20 g/m$^2$ and is commonly prepared in such a manner that after applying pigments onto the paper surface, calendering is carried out. Various types of paper include special art, normal art, matted (delustered) art, single side art (coated on one side), and double art (coated on both sides). Specific examples include OK KINFUJI N, SATIN KINFUJI N, SA KINFUJI, ULTRA-SATIN KINFUJI N, OK ULTRA-AQUA SATIN, OK KINFUJI ONE SIDE, N ART POST, NK SPECIAL BOTH-SIDE ART, RAICHO SUPER-ART N, RAICHO SUPER-ART MN, RAICHO ART N, RAICHO DULL ART N, HIGH MCKINLEY ART, HIGH MCKINLEY MATTE, HIGH MCKINLEY PURE DULL ART, HIGH MCKINLEY SUPER-DULL, HIGH MCKINLEY MATTE ELEGANCE, and HIGH MCKINLEY DEEP MATTE.

The coated paper is a coated paper in which the coated amount on one side is approximately 10 g/m$^2$ and is commonly produced via coating employing a coating apparatus integrated in a paper making machine. The coated amount is less than that of the art paper resulting in a slight decrease in smoothness, but results in advantages such as lower cost and lower weight. Further, types such as light weight coated and minimum weight coated paper, in which the coated amount is further reduced, are also available. Specific examples of such coated paper include POD GLOSS COAT, OK TOP COAT+, OK TOP COAT S, AURORA COAT, MU COAT, NU WHITE, RAICHO COAT N, UTRILLO COAT, PEARL COAT, WHITE PEARL COAT, POD MATTE COAT, NEW AGE, NEW AGE W, OK TOP COAT MATTE, OK ROYAL COAT, OK TOP COAT DULL, Z COAT, SILVER DIA, U LIGHT, NEPTUNE, MU MATTE, WHITE MU MATTE, RAICHO MATTE COAT, UTRILLO GLOSS MATTE, NEW V MATTE, and WHITE NEW V MATTE.

(Non-Absorptive Recording Media)

Employed as non-absorptive media may be any of the various films commonly employed. Examples include polyester film, polyolefin film, polyvinyl chloride film, and polyvinylidene chloride film. Further, employed may be resin coated paper (RC paper prepared by covering both sides of a paper substrate with olefin resins), which is employed as a photographic paper, and YUPO paper which is synthetic paper. «Ink-Jet Recording Method»

Features of the ink-jet recording method of the present invention are that the ink-jet ink or ink-jet ink set of the present invention is ejected onto recording media, and after curing the ink via exposure to actinic radiation, drying is conducted.

Exposure methods of actinic radiation to ink-jet ink will now be described.

(Actinic Radiation Exposure)

(Actinic Radiation)

Actinic radiation, as described in the present invention, includes, for example, electron beams, ultraviolet rays, α rays, β rays, γ rays, and X rays. In view of danger to human body, ease of handling, and wide industrial application, specifically preferred, in the present invention, are electron beams and ultraviolet rays.

When electron beams are employed, their exposure amount is preferably in the range of 0.1 to 30 Mrad. When the exposure amount is controlled to at least 0.1 Mrad, targeted exposure effects tend to be sufficiently realized, while when it is controlled to at most 30 Mrad, degradation of recording media tends to be minimized.

When ultraviolet rays are employed, for example, employed are conventional radiation sources such as low, medium, or high pressure mercury lamps exhibiting a driving pressure of several 100 Pa to 1 MPa, metal halide lamps, xenon lamps emitting radiation in the ultraviolet region, cold cathode tubes, hot cathode tubes, or LEDs.

(Radiation Exposure Conditions after Ink Deposition)

As exposure conditions of actinic radiation, it is preferable that actinic radiation is exposed within 0.001 to 1.0 second after deposition of ink droplets onto a recording medium, but is it more preferable that it is exposed within 0.001 to 0.5 second after the same. In order to form highly detailed images, it is critical that the exposure timing is as soon as possible.

(Exposure Method of Actinic Radiation)

A basic actinic radiation exposure method is disclosed in JP-A No. 60-132767. According to that, radiation sources are arranged on both sides of the head unit, and the exposure radiation source is scanned via a shuttle system. Exposure is carried out at a definite period after deposition of ink droplets. Further, a method is known in which curing is completed employing another radiation source which is not accompanied with drive. For example, U.S. Patent No. 6,145,979 discloses a method in which, as an exposure method, optical fibers are employed, and a collimated radiation beam is incident to a mirror surface arranged on the head unit side and actinic radiation is exposed to the recording section. Employed as image forming methods of the present invention, it is possible to employ any of these methods.

Further, the following method is also one of the preferred embodiments. Exposure to actinic radiation is divided into two stages. In the first stage, actinic radiation is exposed in the same manner as above within 0.001 to 2.0 seconds after deposition of ink droplets, followed by exposure to the second actinic radiation. By dividing the exposure to actinic radiation into two stages, it is possible to minimize contraction of the recording medium, which tends to occur during ink curing.

(Drying after Curing Treatment)

In the ink-jet recording method of the present invention, after exposing actinic radiation onto the ink-jet ink ejected onto a recording medium and then curing it, drying is conducted to remove unnecessary water-soluble organic solvents.

Methods to dry the ink are not particularly limited. For example, a method in which drying is conducted by allowing the rear surface of the recording medium to contact heating roller, or a plate heater, a method in which a heated air is blown onto the printing surface employing a dryer, or a method in which subliming components are removed under reduced pressure is employed via suitable selection or combination.

(Printer Parts)

In order to minimize exposure of actinic radiation such as ultraviolet rays onto the head surfaces due to diffused reflection, it is preferable that parts employed in the ink-jet printer, employing the ink-jet recording method of the present invention, are those which exhibit low transmittance and low reflectance of actinic radiation.

Further, a preferred exposure unit is one which is provided with a shutter. For example, when ultraviolet rays are employed, the illuminance ratio at opening and closing of the shutter is preferably an open shutter/closed shutter of at least 10, is more preferably at least 100, but is most preferably at least 10,000.

The ink-jet printer employed in the ink-jet recording method of the present invention will now be described.

(Ink-Jet Printer)

An example of the ink-jet printer usable in the present invention is constituted as follows: Horizontal image formation is arranged, and on the upper surface, a platen which secures a sheet of recording medium via suction on its rear surface (being the surface on the side opposite the image forming surface) in the specified range by driving a suction device, a recording head which ejects ink onto the recording mecum from the ejection of nozzles, and an exposure means which emits actinic radiation are arranged. Further arranged are a carriage which moves in the scanning direction during image formation, a driving circuit board which is mounted onto the above carriage and is employed to drive the above carriage, a guide part which guides the movement of the carriage along the scanning direction, an optical pattern-loaded linear scale which is arranged along the scanning direction in the longitudinal direction, and a linear encoder sensor which is mounted within the carriage and reads optical patterns provided in the linear scale and outputs them as clock signals.

(Recording Head)

The employed recording head (being an ink-jet print head) may be either an on-demand system or a continuous system. Further listed as an ejection system may be an electrical-mechanical conversion system (for example, a single cavity type, a double cavity type, a vendor type, a piston type, a share mode type, or a shared wall type); an electrical-thermal conversion system (for example, a thermal ink-jet type and BUBBLE JET (being a registered trade name) type); an electrostatic suction system (for example, an electric field control type and a slit jet type); and a discharge system (for example, a spark jet type). Of these, preferred is the electrical-mechanical conversion system, but any of the ejection systems may be employed.

**EXAMPLES**

The present invention will now be described with reference to examples, however the present invention is not limited thereto. In examples, "parts" or "%" is employed and represents "parts by weight" or "% by weight", respectively, unless otherwise specified.

<<Preparation of Crosslinkable polymers>>

(Preparation of Crosslinkable polymer compound 1)

After dissolving, while heating, 100 g of polyacrylic acid (at a degree of polymerization of 600) in 750 g of ethanol, 3.4 g (being equivalent to 1.2 mol% as a modification ratio with respect to polyacrylic acid) of 4-hydroxybutyl acrylate glycidyl ether and 11 g of pyridine, as a catalyst, were added. The temperature was maintained at 60 °C and stirring was carried out for 24 hours. Further, temperature of the solution was raised to 95 °C, and ethanol was distilled off while dripping water. Thereafter, an ion exchange resin (PK-216H, produced by Mitsubishi Chemical Corp.) treatment was carried out and pyridine was removed, whereby an aqueous solution of non-volatile components at a concentration of 15% was obtained. Subsequently, IRUGACURE 2959 (produced by Ciba Specialty Chemicals Co., Ltd.) was blended at a ratio of 0.1 g with respect to 100 g of the 15% aqueous solution. Thereafter, the resultant solution was diluted with ion-exchanged water, whereby a 10% aqueous Crosslinkable polymer 1 solution was prepared. Crosslinkable polymer 1 is a polymer in which polyacrylic acid as a hydrophilic main chain incorporates a plurality of side chains, and which is capable of crosslinking among the side chains via exposure to actinic radiation.

(Preparation of Crosslinkable polymer 2)

A 10% aqueous Crosslinkable polymer 2 solution was prepared in the same manner as above Crosslinkable polymer 1 solution, except that the degree of polymerization of polyacrylic acid was changed to 400 and the modification ratio of 4-hydroxybutyl acrylate glycidyl ether to polyacrylic acid was changed to 4 mol%. Crosslinkable polymer 2 is a polymer in which polyacrylic acid as a hydrophilic main chain incorporates a plurality of side chains and which is capable of crosslinking among the side chains via exposure to actinic radiation.

(Preparation of Crosslinkable polymer 3)

A 10% aqueous Crosslinkable polymer 3 solution was prepared in the same manner as above Crosslinkable polymer 1 solution, except that the degree of polymerization of polyacrylic acid was changed to 600 and the modification ratio of 4-hydroxybutyl acrylate glycidyl ether to polyacrylic acid was changed to 4 mol%. Crosslinkable polymer 3 is a polymer in which polyacrylic acid as a hydrophilic main chain incorporates a plurality of side chains and which is capable of crosslinking among the side chains via exposure to actinic radiation.

(Preparation of Crosslinkable polymer 4)

Charged into a reaction vessel were 56 g of glycidyl methacrylate, 48 g of p-hydroxybenzaldehyde, 2 g of pyridine, and 1 g of N-nitroso-phenylhydroxyamine ammonium salt, and the resulting mixture was stirred for 8 hours while the vessel was immersed in an 80 °C water bath. After cooling the resultant solution to the room temperature, a 5% aqueous sodium carbonate solution was added and stirred for 1 hour and extracted with ethyl acetate. The ethyl acetate was removed by evaporation and p-(3-methacryloxy-2-hydroxypropyloxy)benzaldehyde was obtained.

Subsequently, 45 g of saponified vinyl acetate at a saponification ratio of 88% was dissolved in 225 g of ion-exchanged water. Thereafter added to the resulting solution were 4.5 g of phosphoric acid and p-(3-methacryloxy-2-hydroxypropyloxy)benzaldehyde, prepared in the above reaction, at such an amount that the modification ratio to polyvinyl alcohol reached 3 mol%, and the resulting mixture was stirred at 80°C for 12 hours. After cooling the resulting solution to room temperature, 30 g of basic ion-exchange resins were added and the resulting mixture was stirred for one hour. Thereafter, the ion-exchange resins were removed via filtration and 0.3 g of IRUGACURE 2959 (produced by Ciba Specialty Chemicals Co.) was added as a photopolymerization initiator. A 15% by weight aqueous Crosslinkable Polymer 4 solution was thus prepared while diluted with pure water. Crosslinkable polymer 4 is a polymer in which saponified vinyl acetate as a hydrophilic main chain incorporates a plurality side chains and which is capable of crosslinking among the side chains via exposure to actinic radiation.

(Preparation of Crosslinkable polymer 5)

A 15% by weight aqueous Crosslinkable polymer 5 solution was prepared in the same manner as above Crosslinkable polymer 4 solution, except that the degree of polymerization saponified polyvinyl acetate was changed to 300, the saponification ratio was changed to 98%, and the modification ratio of p-(3-methacryloxy-2-hydroxypropyloxy) benzaldehyde was changed to 3 mol%. Crosslinkable polymer 5 is a polymer in which saponified vinyl acetate as a hydrophilic main chain incorporates a plurality side chains and which is capable of crosslinking among the side chains via exposure to actinic radiation.

(Preparation of Crosslinkable polymer 6)

A 15% by weight aqueous Crosslinkable polymer 6 solution was prepared in the same manner as above Crosslinkable polymer 4 solution, except that the degree of polymerization saponified polyvinyl acetate was changed to 500, the saponification ratio was changed to 98%, and the modification ratio of p-(3-methacryloxy-2-hydroxypropyloxy) benzaldehyde was changed to 1 mol%. Crosslinkable polymer 6 is a polymer in which saponified vinyl acetate as a hydrophilic main chain incorporates a plurality side chains and which is capable of crosslinking among the side chains via exposure to actinic radiation.

(Preparation of Crosslinkable polymer 7)

A 15% by weight aqueous Crosslinkable polymer 7 solution was prepared in the same manner as above Crosslinkable polymer 4 solution, except that the degree of polymerization saponified polyvinyl acetate was changed to 300, the saponification ratio was changed to 98%, and the modification ratio of p-(3-methacryloxy-2-hydroxypropyloxy) benzaldehyde was changed to 2 mol%. Crosslinkable polymer 7 is a polymer in which saponified vinyl acetate as a hydrophilic main chain incorporates a plurality side chains and which is capable of crosslinking among the side chains via exposure to actinic radiation.

(Preparation of Crosslinkable polymer 8)

A 15% by weight aqueous Crosslinkable polymer 8 solution was prepared in the same manner as above Crosslinkable polymer 4 solution, except that the degree of polymerization saponified polyvinyl acetate was changed to 300, the saponification ratio was changed to 98%, p-(3-methacryloxy-2-hydroxypropyloxy)benzaldehyde was changed to 4-(4-formylphenylethenyl)-1-methyl pyrydinium methosulfate, and the modification ratio of 4-(4-formylphenylethenyl)-1-methyl pyrydinium methosulfate (produced by Showa Chemical) was changed to 2%. Crosslinkable polymer 8 is a polymer in which saponified vinyl acetate as a hydrophilic main chain incorporates a plurality side chains and which is capable of crosslinking among the side chains via exposure to actinic radiation.

(Reactive Compounds A and B)

A-200, an actinic radiation reactive compound employed in conventional UV ink, produced by Shin-Nakamura Chemical Industry Co., Ltd. was employed as Reactive Compound A, and A-TMPT-3EO, produced by Shin-Nakamura Chemical Co., Ltd. was employed as Reactive Compound B.

<<Preparation of Ink Sets>>

(Preparation of Ink Set 1)

Based on the following method, Ink Set 1 composed of Yellow Ink 1, Magenta Ink 1, Cyan Ink 1, and Black Ink 1 was prepared.

(Preparation of Yellow Ink 1)

Each of the following additives was successively blended and the resulting mixture was dispersed employing a bead mill. The resulting dispersion was then filtered via a #3000 metal mesh filter, whereby Yellow Ink 1 was prepared.

| | |
|---|---|
| Crosslinkable polymer 3 (as solids) | 2 parts |
| Propylene glycol | 40 parts |
| OLFIN E1010 (produced by Nissin Chemical Industry Co., Ltd.) | 0.5 part |
| Pigment: CAB-O-JET 270 (yellow self-disperse dye, produced by Cabot Corp.) (as solids) | 3 parts |
| Mildewcide: PROXEL GXL (produced by Avicia Ltd.) | 0.3 part |

Ion-exchanged water was added to the above additives to result in 100 parts.

(Preparation of Magenta Ink 1, Cyan Ink 1, and Black Ink 1)

Each of Magenta Ink 1, Cyan Ink 1, and Black Ink 1 was prepared in the same manner as above Yellow Ink 1, except that pigment CAB-O-JET 270 was replaced with each of CAB-O-JET 260 (being a magenta self-disperse pigment, produced by Cabot Corp.), CAB-O-JET 250 (being a cyan self-disperse pigment, produced by Cabot Corp.), or CAB-O-JET 300 (being a black self-disperse pigment, produced by Cabot Corp.).

(Preparation of Ink Sets 2 to 18)

Each of Ink Sets 2 to 18 was prepared in the same manner as above Ink Set 1, except that the type and added amount of the crosslinkable polymer, as well as the type and added amount of the water-soluble organic solvents of each ink were changed to those described in Table 1.
Each of the solvents and surface active agents abbreviated in Table 1 is detailed.

<Solvents>

EG: ethylene glycol
DEG: diethylene glycol
PG: propylene glycol
Gly: glycerin
PDO: 1,3-propanediol
HDO: 1,2-hexanediol
TEGBE: triethylene glycol monobutyl ether
DPGME: dipropylene glycol monomethyl ether
MP: N-methyl-2-pylorridone
PRY: 2-pylorridone

<Surface Active Agents>

OLFIN E1010: an acetylenol based surface active agent, produced by Nissin Chemical Industry Co., Ltd.
BYK 347: a polysiloxane based surface active agent, produced by Big Chemie Co.

TABLE 1-1

| Ink Set No. | Crosslinkable Polymer | | | | Solvent Constitution | | | | Surface Active Agent | | Remarks |
|---|---|---|---|---|---|---|---|---|---|---|---|
| | Type | *2 | *3 | *1 | Solvent Type 1 | | Solvent Type 2 | | Type | *1 | |
| | | | | | Type | *1 | Type | *1 | | | |
| 1 | Crosslinkable Polymer 3 | 600 | 4.0 | 2.0 | PG | 40 | - | - | OLFIN E1010 | 0.5 | Present Invention |
| 2 | Crosslinkable Polymer 4 | 550 | 3.0 | 2.0 | EG | 10 | PG | 25.0 | OLFIN E1010 | 0.5 | Present Invention |
| 3 | Crosslinkable Polymer 5 | 300 | 3.0 | 5.0 | EG | 20 | TEGBE | 10.0 | BYK347 | 0.2 | Present Invention |
| 4 | Crosslinkable Polymer 2 | 400 | 4.0 | 2.0 | PDO | 35 | - | - | OLFIN E1010 | 0.5 | Present Invention |
| 5 | Crosslinkable Polymer 5 | 300 | 3.0 | 2.0 | PG | 40 | - | - | BYK347 | 1.0 | Present Invention |
| 6 | Crosslinkable Polymer 5 | 300 | 3.0 | 2.0 | PG | 20 | TEGBE | 8.0 | OLFIN E1010 | 1.0 | Present Invention |
| 7 | Crosslinkable Polymer 5 | 300 | 3.0 | 2.0 | EG | 10 | PRY | 15.0 | OLFIN E1010 | 1.0 | Present Invention |
| 8 | Crosslinkable Polymer 5 | 300 | 3.0 | 4.5 | PG | 15 | HDO | 10.0 | BYK347 | 0.2 | Present Invention |

*1 : Added Amount (parts)
*2 : Degree of Polymerization
*3 : Modification Ratio (mol%)

TABLE 1-2

| Ink Set No. | Crosslinkable Polymer | | | | Solvent Constitution | | | | Surface Active Agent | | Remarks |
|---|---|---|---|---|---|---|---|---|---|---|---|
| | Type | *2 | *3 | *1 | Solvent Type 1 | | Solvent Type 2 | | Type | *1 | |
| | | | | | Type | *1 | Type | *1 | | | |
| 9 | Crosslinkable Polymer 1 | 600 | 1.2 | 2.0 | EG | 35 | - | - | OLFIN E1010 | 1.0 | Comparative Example |
| 10 | Crosslinkable Polymer 8 | 300 | 2.0 | 2.0 | DPGME | 4 | - | - | OLFIN E1010 | 1.0 | Comparative Example |
| 11 | Crosslinkable Polymer 6 | 500 | 1.0 | 2.0 | EG | 20 | Gly | 5.0 | OLFIN E1010 | 1.0 | Comparative Example |
| 12 | Crosslinkable Polymer 6 | 500 | 1.0 | 2.0 | PG | 15 | HDO | 5.0 | - | - | Comparative Example |

(continued)

| Ink Set No. | Crosslinkable Polymer | | | | Solvent Constitution | | | | Surface Active Agent | | Remarks |
|---|---|---|---|---|---|---|---|---|---|---|---|
| | Type | *2 | *3 | *1 | Solvent Type 1 | | Solvent Type 2 | | Type | *1 | |
| | | | | | Type | *1 | Type | *1 | | | |
| 13 | Crosslinkable Polymer 2 | 400 | 4.0 | 2.0 | EG | 35 | - | - | OLFIN E1010 | 0.5 | Comparative Example |
| 14 | Crosslinkable Polymer 7 | 300 | 2.0 | 2.0 | DPGME | 4 | - | - | OLFIN E1010 | 1.0 | Comparative Example |
| 15 | Crosslinkable Polymer 5 | 300 | 3.0 | 2.0 | PG | 30 | - | - | OLFIN E1010 | 1.0 | Comparative Example |
| 16 | Reactive Compound A | - | - | 2.0 | EG | 20 | Gly | 5.0 | OLFIN E1010 | 1.0 | Comparative Example |
| 17 | ReactiveCompound B | - | - | 2.0 | MP | 20 | HDO | 10.0 | - | - | Comparative Example |
| 18 | ReactiveCompound B | - | - | 2.0 | DEG | 20 | - | - | OLFIN E1010 | 1.0 | Comparative Example |

*1 : Added Amount (parts)
*2 : Degree of Polymerization
*3 : Modification Ratio (mol%)

<<Evaluation of Solubility>>

A pseudo-ink in which the pigment was replaced with water was prepared for each of the ink sets described in Fig. 1, and solubility of the crosslinkable polymer and the reactive compound in the above ink was evaluated. Further, with regard to the inks described in Table 1, all of the solvents, pigments, and other additives, other than the crosslinkable polymers and the reactive compounds, were replaced with water and whereby a mixture of water and crosslinkable polymers or reactive compounds was prepared, and solubility of each of the crosslinkable polymers and reactive compounds was also evaluated.

Each ink liquid at 20 °C was visually observed, and solubility of the crosslinkable polymers and reactive compounds was evaluated based on the following criteria. Table 2 shows the results.

    A: dissolution was completed to result in transparency
    B: turbidity or the presence of precipitates was confirmed

<<Formation of images>>

An on-demand type ink-jet printer of a maximum recording density of 1,440 x 1,440 dpi (where dpi represents the number of dots per 2.54 cm) was readied, which was loaded with a piezo type head of a nozzle aperture of 23 µm, a driving frequency of 12 kHz, 128 nozzles, a minimum droplet volume of 3 pL, and a nozzle density of 180 dpi, and in which 120 W/cm metal halide lamps (MAL 400 NL of a radiation source power of 3 kW·hour, produced by Japan Electric Cell Co.) were arranged at both ends of the piezo type head. Under exposure to radiation from the metal halide lamp, inks of each of Ink Sets 1 to 18 were ejected, and a 10 cm x 10 cm solid image of each color and a wedge image in which each of Y, M, C, and K colors were adjacent to another were recorded on art paper, namely SA KINFUJI N, produced by Oji Paper Co., Ltd. After image recording, drying was conducted for one minute employing a dryer and natural drying was then conducted for 24 hours.

<<Evaluation of Images>>

Each of the images obtained by Ink Set 1 to 18 prepared via the above method was evaluated based on the following method. Performances better than A were judged to be commercially available.

(Evaluation of Color Bleeding Resistance)

The wedge images prepared as above were visually observed and any color bleeding resistance was evaluated based on the following criteria.

A: no bleeding between colors was noted even in high density regions
B: slight bleeding at the boundary between colors resulted in medium to high density regions
C: bleeding at the boundary between colors resulted all over the image.

(Evaluation of Banding Resistance)

Each of the solid images, prepare as above, was visually observed, and banding resistance was evaluated based on the following criteria.

A: no banding was noted in each of the color solid images, and the deposition accuracy of ink droplets was excellent
B: banding resulted in each of the solid color images, and the deposition accuracy of ink droplets was poor
C: banding frequently resulted in each of the solid color images, and the deposition accuracy of ink droplets was extremely poor
D: beading (non-uniformity due to ink flooding) resulted, and it was not possible to conduct evaluation for banding.

<<Evaluation of Ejection Stability>>

By employing the ink-jet head employed to form images and the ink flight viewing apparatus of strobo light emitting system, shown in Fig. 2 of JP-A No. 2002-363469, the ejection cycle and the light emitting cycle were synchronized, and the ink flight was monitored employing a CCD camera, whereby ink ejection stability was evaluated based on the following criteria.

A+: ink droplets were ejected normally, and neither oblique ejection nor rate variation was noted
A: ink droplets were almost ejected normally, and 1 or 2 oblique ejections were noted
B: abnormal ink ejection was noted and some of droplets resulted in oblique ejection and rate variation
C: much abnormal ink ejection was noted and many droplets resulted in oblique ejection and rate variation

<<Evaluation of Intermittent Ejection Property>>

By employing the ink-jet head employed to form images, under the environment of room temperature 25°C and humidity 55%, each ink was ejected continuously for one minute, stopped ejecting for one minute and restarted ejecting. The ink flight was monitored employing a CCD camera, whereby intermittent ejection property was evaluated based on the following criteria.

A+: all ink droplets from all nozzles were ejected normally after restarting of ejecting
A: all ink droplets from all nozzles were ejected normally after restarting of ejecting but some of droplets resulted in oblique ejection and rate variation
B: no ink droplets from some nozzles after restarting of ejecting
C: no ink droplets from more than half nozzles after restarting of ejecting

Table 2 shows the results.

Table 2

| Ink Set No. | *1 | | Evaluation Results | | | | Remarks |
| --- | --- | --- | --- | --- | --- | --- | --- |
| | In ink | In water | *2 | Banding Resistance | Ejection Stability | *3 | |
| 1 | A | B | A | A | A | A+ | Present Invention |
| 2 | A | B | A | A | A | A+ | Present Invention |
| 3 | A | B | A | A | A+ | A | Present Invention |
| 4 | A | B | A | A | A+ | A+ | Present Invention |

(continued)

| Ink Set No. | *1 | | Evaluation Results | | | | Remarks |
|---|---|---|---|---|---|---|---|
| | In ink | In water | *2 | Banding Resistance | Ejection Stability | *3 | |
| 5 | A | B | A | A | A+ | A+ | Present Invention |
| 6 | A | B | A | A | A+ | A+ | Present Invention |
| 7 | A | B | A | A | A+ | A+ | Present Invention |
| 8 | A | B | A | A | A+ | A+ | Present Invention |
| 9 | A | A | B | A | A | A | Comparative Example |
| 10 | A | A | B | A | A | A | Comparative Example |
| 11 | A | A | B | A | A | A | Comparative Example |
| 12 | A | A | B | A | A | A | Comparative Example |
| 13 | B | B | B | B | B | A | Comparative Example |
| 14 | B | B | B | B | B | A | Comparative Example |
| 15 | B | B | B | B | B | A | Comparative Example |
| 16 | A | A | C | D | A | B | Comparative Example |
| 17 | A | B | C | D | A | B | Comparative Example |
| 18 | B | B | C | D | A | B | Comparative Example |

*1 : Solubility of crosslinkable polymer
*2 : Color Bleeding Resistance
*3 : Intermittent Ejection Property

As can be clearly seen from the results described in Table 2, the ink sets of the present invention, which incorporate the crosslinkable polymer according to the present invention, which is dissolved in the ink but is not dissolved all amount in water, exhibited excellent ejection stability and intermittent ejection property from the ink-jet head, and also resulted in excellent color bleeding resistance, and banding resistance (being beading resistance) of formed images, compared to the comparative examples.

Based on the embodiments of the present invention, it was possible to provide ink-jet inks and ink-jet ink sets, which exhibited printing adaptability onto various recording media, exhibited excellent ejection stability and excellent intermittent ejection property, and resulted in images exhibiting excellent color bleeding resistance and beading resistance, and an ink-jet recording method using the same.

It is to be noted that various changes and modifications will be apparent to those skilled in the art. Therefore, unless such changes and modifications depart from the scope of the present invention, they should be construed as being included therein.

**Claims**

1. An ink-jet ink comprising a water, an organic solvent, and a polymer having a hydrophilic main chain and a plurality of side chains on the hydrophilic main chain, wherein the polymer,

(A) in which at least a part of the side chains are crosslinkable via exposure to actinic radiation,
(B) exists in a dissolved state in the ink, and
(C) has a property that all amount of the polymer is not dissolved in water when the polymer is mixed with water in an amount of the same content ratio as in the ink-jet ink, and
(D) has a partial structure represented by the following formula (A):

Formula (A)        Poly-$\{(X1)_m\text{-}[B\text{-}(Y1)_n]_p\}$

wherein Poly represents a hydrophilic main chain, { } represents a side chain, x1 represents a (p+1) valent linking group, p represents a positive integer which is 1 to 5, B represents a crosslinkable group which is a double- or triple-bond containing group, y1, represents a hydrogen atom, or a substituent, m represents 0 or 1 and n represents 0 or 1.

2. The ink-jet ink of claim 1, wherein the hydrophilic main chain of the polymer is saponified polyvinyl acetate.

3. The ink-jet ink of claim 2, wherein the modification ratio of the side chains of the polymer is 0.8 to 4.0 mol%.

4. The ink-jet ink of claim 1, wherein the degree of polymerization of the hydrophilic main chain of the polymer is 200 to 500.

5. The ink-jet ink of claim 1, wherein the content of said polymer is 0.8 to 5% by weight.

6. The ink-jet ink of claim 1, wherein the organic solvent is 2- alkanediol having 4 to 7 carbon atoms, polyhydric alcohol ether, or a heterocyclic compound.

7. The ink-jet ink of claim 1, wherein the organic solvent is a heterocyclic compound.

8. An ink-jet ink set comprising at least two ink-jet inks, wherein at least one of said ink-jet inks is the ink-jet ink described in claim 1.

9. An ink-jet recording method comprising the steps of,
ejecting the ink-jet ink described in claim 1 on to a recording medium,
exposing of actinic radiation to the ejected ink-jet ink, thereafter,
drying the exposed ink-jet ink.

10. The ink-jet recording method of claim 9, wherein the recording medium is coated paper for printing.

11. The ink-jet recording method of claim 9, wherein the recording medium is a non-absorptive recording medium.

12. The ink-jet recording method comprising the steps of,
ejecting the ink-jet inks of ink-jet ink set described in claim 8 on to a recording medium,
exposing of actinic radiation to the ejected ink-jet inks, thereafter,
drying the exposed ink-jet inks.

**Patentansprüche**

1. Eine Tintenstrahltinte, umfassend Wasser, ein organisches Lösemittel und ein Polymer mit einer hydrophilen Hauptkette und einer Mehrzahl an Seitenketten an der hydrophilen Hauptkette, worin das Polymer,

(A) in welchem mindestens ein Teil der Seitenketten vernetzbar sind durch Bestrahlung mit aktinischer Strahlung,
(B) in einem gelösten Zustand in der Tinte vorliegt und
(C) eine Eigenschaft aufweist, dass die gesamte Menge des Polymers nicht in Wasser gelöst wird, wenn das Polymer mit Wasser in einer Menge gemischt wird, welche demselben Gehaltsverhältnis entspricht wie in der Tintenstrahltinte, und
(D) eine Teilstruktur aufweist, welche durch die folgende Formel (A) dargestellt wird:

Poly-$\{(X1)_m\text{-}[B\text{-}(Y1)_n]_p\}$,

worin Poly gleich einer hydrophilen Hauptkette entspricht, { } einer Seitenkette entspricht, X1 gleich einer (p + 1)-valenten Verknüpfungsgruppe entspricht, p gleich einer positiven ganzzahligen Zahl entspricht, welche 1 bis 5 ist, B gleich einer vernetzbaren Gruppe entspricht, bei welcher es sich um eine Gruppe handelt, die eine Doppelbindung oder eine Dreifachbindung umfasst, Y1 gleich einem Wasserstoffatom oder einem Substituenten entspricht, m gleich 0 oder 1 entspricht und n gleich 0 oder 1 entspricht.

2. Die Tintenstrahltinte nach Anspruch 1, worin die hydrophile Hauptkette des Polymers mit Polyvinylacetat verseift ist.

3. Die Tintenstrahltinte nach Anspruch 2, worin das Modifikationsverhältnis der Seitenketten des Polymers 0,8 bis 4,0 Mol-% beträgt.

4. Die Tintenstrahltinte nach Anspruch 1, worin der Grad an Polymerisation der hydrophilen Hauptkette des Polymers gleich 200 bis 500 ist.

5. Die Tintenstrahltinte nach Anspruch 1 , worin der Gehalt an dem Polymer 0,8 bis 5 Gew.-% beträgt.

6. Die Tintenstrahltinte nach Anspruch 1, worin das organische Lösemittel gleich 2-Alkandiol mit 4 bis 7 Kohlenstoffatomen, einem mehrwertigen Alkoholether oder einer heterocyclischen Verbindung ist.

7. Die Tintenstrahltinte nach Anspruch 1, worin das organische Lösemittel eine heterocyclische Verbindung ist.

8. Ein Tintenstrahl-Set, umfassend mindestens zwei Tintenstrahltinten, worin mindestens eine dieser Tintenstrahltinten gleich der Tintenstrahltinte ist, welche in Anspruch 1 beschrieben ist.

9. Ein Tintenstrahl-Aufzeichnungsverfahren, umfassend die Schritte:

Ausstoßen von Tintenstrahltinte, welche in Anspruch 1 beschreiben ist, auf ein Aufzeichnungsmedium,
Bestrahlen der abgestoßenen Tintenstrahltinte danach mit aktinischer Strahlung,
Trocknen der bestrahlten Tintenstrahltinte.

10. Das Tintenstrahl-Aufzeichnungsverfahren nach Anspruch 9, worin das Aufzeichnungsmedium ein beschichtetes Papier zum Drucken ist.

11. Das Tintenstrahl-Aufzeichnungsverfahren nach Anspruch 9, worin das Aufzeichnungsmedium ein nicht absorptives Aufzeichnungsmedium ist.

12. Das Tintenstrahl-Aufzeichnungsverfahren, umfassend die Schritte
Ausstoßen von Tintenstrahltinte aus dem Tintenstrahltinten-Set, welches in Anspruch 8 beschrieben ist, auf ein Aufzeichnungsmedium,
Bestrahlen der abgestoßenen Tintenstrahltinten danach mit aktinischer Strahlung,
Trocknen der bestrahlten Tintenstrahltinten.

**Revendications**

1. Encre pour jet d'encre, comprenant de l'eau, un solvant organique, et un polymère possédant une chaîne principale hydrophile et plusieurs chaînes latérales sur la chaîne principale hydrophile, dans laquelle le polymère

(A) dans lequel au moins une partie des chaînes latérales peut être réticulée par exposition à un rayonnement actinique,
(B) existe à l'état dissous dans l'encre, et
(C) possède une propriété telle que toute la quantité du polymère n'est pas dissoute dans l'eau lorsque le polymère est mélangé avec de l'eau en une quantité qui est égale à la teneur de l'encre pour jet d'encre, et
(D) possède une structure partielle qui répond à la formule (A) suivante :

$$\text{formule (A) :} \qquad Poly\text{-}\{(x1)_m \text{ - } [B\text{-}(y1)_n]_p\}$$

dans laquelle « Poly » représente une chaîne principale hydrophile, { } représente une chaîne latérale, x1 représente un groupe de liaison à valence (p+1), p représente un entier positif égal à 1-5, B représente un groupe réticulable, à savoir un groupe contenant une liaison double ou une liaison triple, y1 représente un atome d'hydrogène ou un substituant, m représente 0 ou 1 et n représente 0 ou 1.

2. Encre pour jet d'encre selon la revendication 1, dans laquelle la chaîne principale hydrophile du polymère représente de l'acétate de polyvinyle saponifié.

3. Encre pour jet d'encre selon la revendication 2, dans laquelle l'indice de modification des chaînes latérales du polymère s'élève de 0,8 à 4,0 moles %.

4. Encre pour jet d'encre selon la revendication 1, dans laquelle le degré de polymérisation de la chaîne principale hydrophile du polymère s'élève de 200 à 500.

5. Encre pour jet d'encre selon la revendication 1, dans laquelle la teneur dudit polymère s'élève de 0,8 à 5 % en poids.

6. Encre pour jet d'encre selon la revendication 1, dans laquelle le solvant organique est le 2-alcanediol contenant de 4 à 7 atomes de carbone, un éther d'alcool polyvalent ou un composé hétérocyclique.

7. Encre pour jet d'encre selon la revendication 1, dans laquelle le solvant organique est un composé hétérocyclique.

8. Jeu d'encres pour jet d'encre comprenant au moins deux encres pour jet d'encre, au moins une desdites encres pour jet d'encre représentant l'encre pour jet d'encre décrite à la revendication 1.

9. Procédé d'enregistrement au jet d'encre, comprenant les étapes consistant à :

éjecter l'encre pour jet d'encre décrite à la revendication 1 sur un support d'enregistrement ;
exposer à un rayonnement actinique, l'encre pour jet d'encre éjectée ; et ensuite
sécher l'encre pour jet d'encre exposée.

10. Procédé d'enregistrement au jet d'encre selon la revendication 9, dans lequel le support d'enregistrement représente du papier couché pour l'impression.

11. Procédé d'enregistrement au jet d'encre selon la revendication 9, dans lequel le support d'enregistrement représente un support d'enregistrement non absorbant.

12. Procédé d'enregistrement au jet d'encre, comprenant les étapes consistant à :

éjecter les encres pour jet d'encre du jeu d'encres pour jet d'encre décrit à la revendication 8 sur un support d'enregistrement ;
exposer à un rayonnement actinique, les encres pour jet d'encre éjectées ; et ensuite
sécher les encres pour jet d'encre exposées.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4391365 A
- US 4484948 A
- US 4228438 A
- JP 5064667 A
- JP 2002080767 A
- JP 2002275404 A
- JP 60129742 A
- JP 56067309 A
- JP 2000181062 A
- JP 2004189841 A
- JP 2004161942 A
- GB 1077484 A
- GB 1039458 A
- GB 1004957 A
- GB 1077628 A
- US 2612448 A
- WO 9748769 A
- JP 10110129 A
- JP 11246807 A
- JP 11057458 A
- JP 11189739 A
- JP 11323232 A
- JP 2000265094 A
- JP 11049974 A
- JP 2000273383 A
- JP 2000303014 A
- JP 2002179977 A
- JP 2002201401 A
- JP 57074192 A
- JP 57087989 A
- JP 60072785 A
- JP 61146591 A
- JP 1095091 A
- JP 3013376 A
- JP 59042993 A
- JP 59052689 A
- JP 62280069 A
- JP 61242871 A
- JP 4219266 A
- JP 2001081379 A
- JP 11209670 A
- JP 60132767 A
- US 6145979 A
- JP 2002363469 A

**Non-patent literature cited in the description**

- Lecture of New Experimental Chemistry. Shin Jitsu-ken Kagaku Koza Dai 18 Kan (Kaimen to Colloid. Maruzen Co., Ltd, vol. 18, 68-117